(19)

Europäisches
Patentamt
European
Patent Office
Office européen
des brevets

(11) **EP 1 850 201 A2**

(12) **EUROPEAN PATENT APPLICATION**
published in accordance with Art. 158(3) EPC

(43) Date of publication:
**31.10.2007 Bulletin 2007/44**

(51) Int Cl.:
***G05D 15/00*** (2006.01)

(21) Application number: **05799268.7**

(22) Date of filing: **20.09.2005**

(86) International application number:
**PCT/ES2005/000510**

(87) International publication number:
**WO 2006/035094 (06.04.2006 Gazette 2006/14)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **20.09.2004 ES 200402240**

(71) Applicant: **Asociacion de Investigacion de las Industrias Ceramicas A.I.C.E.**
**12004 Castellon (ES)**

(72) Inventors:
• **AMORÓS ÁLBARO, José Luis**
**12004 Castellon de la Plana (ES)**
• **MALLOL GASCH, José Gustavo**
**12004 Castellon de la Plana (ES)**
• **LLORENS MESADO, Domingo Tomás**
**12004 Castellon de la Plana (ES)**
• **CANTAVELLA SOLER, Vicente**
**12004 Castellon de la Plana (ES)**

(74) Representative: **Ungria Lopez, Javier et al**
**Avda. Ramon y Cajal, 78**
**28043 Madrid (ES)**

(54) **METHOD AND DEVICE FOR AUTOMATICALLY CONTROLLING THE APPARENT DENSITY OF CERAMIC COMPONENTS**

(57) Abstract: The invention relates to a method of taking a contactless continuous measurement of the moisture of compacted components or the press powder used in the production thereof and using said measurement for the automatic or non-automatic modification of the pressing process, such as to maintain the apparent dry density of the newly-formed ceramic supports constant. The inventive device comprises a sensor (4) which can be used for the contactless continuous measurement of the moisture at which the ceramic component (3) is formed in an industrial press (1). The measurement from the sensor is introduced into a computer (5) which is used to calculate the maximum forming pressure.

FIG.1

EP 1 850 201 A2

## Description

## OBJECT OF THE INVENTION

As stated in the title of this descriptive specification, the present invention relates to a method and device for automatically controlling the apparent density of ceramic components, such as to maintain the apparent dry density of industrially formed ceramic tiles constant.

The continuous measurement of the moisture content and of the maximum compaction pressure of ceramic tiles permits their apparent dry density to be known, since the three variables are mathematically related by a compaction diagram. On the basis of this relation, the pressure necessary for maintaining the apparent dry density constant is calculated. This value is fed into the control system for the corresponding press, modifying its functioning if necessary.

## PRIOR ART OF THE INVENTION

Numerous works developed by the Asociación de Investigación de las Industrias Cerámicas (AICE, the Ceramic Industries Research Association) in coordination with the Jaume I University in order to form the Instituto Mixto de Tecnología Cerámica (Mixed Institute for Ceramic Technology, hereinafter referred to as the ITC) established that the porosity of recently pressed ceramic supports is the variable that governs their behaviour during the stages of the production process (drying, decoration, firing, etc.). The macroscopic variable directly related to the porosity of the components is the apparent density of the dry component or apparent dry density.

In different publications of the ITC it is established that, for a given powder, the industrial variable determining the apparent dry density ($D_{ap}$) of the pressed support are: the moisture content of the powder (H) and the maximum pressing pressure (P), related by means of the compaction diagram:

$$D_{ap} = (m\ H + b)\ \log\ (P)\ +\ M\ H + B$$
*Equation 1*

where m, b, M and B are empirical parameters related to the nature of the powder being pressed.

This knowledge gave rise to doctoral theses, numerous publications in specialised scientific journals and various papers in conferences, the most relevant of which are cited at the end of this section (1 to 16).

Having highlighted the extraordinary importance of the apparent density in controlling the production process of ceramic tiles, a method was then developed in the ITC for measuring this variable by immersion of pieces of components in mercury (17), which was patented by the Institute itself *(P0531109)* and whose use quickly spread to all companies producing ceramic tiles.

This procedure forms the basis of the current method of controlling the pressing operation in all production plants for ceramic tiles (18). The method consists of the manual sampling of the flow of tiles by an operator who, following their fragmentation, weighing, drying and immersion in mercury, determines the apparent density of the piece. The use of this system has enabled the production process for ceramic tiles to be controlled on a discontinuous basis for the last 20 years.

Subsequently, improvements and adaptations were made to the industrial use of this procedure which gave rise to other patents *(P92022102,* ES2005099*,* ES20099633 and ES2009165*)*. Nevertheless, the method is destructive and manual, it suffers from the slowness and imprecision inherent to human action and it can be dangerous for the health of the operators applying it, owing to the need to use mercury for performing the procedure.

Although attempts had been made to improve the present system for measuring apparent density, above all in terms of safety, speed and reliability ((**19 and 20**) **and patents** *P200202749, P9702478,* EP0936457*,* CN2450661U), the existing methods, even those which do not use mercury, continue to be discontinuous, destructive and slow, since they do not permit automatic control over the pressing operation.

Industrial practice requires a method that is continuous, precise, fast and, if possible, nondestructive and safe.

Along these lines, two patents are known (**P9102499 and P9501767**). In both cases, the method is based on the use of the compaction diagrams (***Equation 1***). In the first patent, an estimate is made of the distribution of the apparent density of the piece starting from the measurement of the pressure inside the cell where the compaction thereof is performed (**21 and 22**). In the second case, the system estimates the apparent density of recently compacted damp pieces (apparent density when green), starting from the measurement of the moisture content made on the press powder and of the maximum compaction pressure.

For a particular powder, the apparent density of the dry pieces (apparent dry density) depends on the moisture content of the powder and on the maximum pressing pressure in accordance with the compaction diagrams (***Equation 1***).

In industrial practice, the maximum compaction pressure can be kept constant with relative ease, but variations in the moisture content of the press powder are normal and difficult to avoid. As a final result, pieces are obtained with a different apparent dry density, which behave differently in the production process and, most importantly, will give rise to tiles with a different final size.

## Most relevant references

**Doctoral theses presented by personnel from the ITC**

(1) Ceramic pastes for single-fired pavements. Influence of the pressing variables on the properties of the pieces raw and on their behaviour during pressing and firing.José Luis Amorós Albaro, November 1987.

(2) Suction of liquids in porous ceramic tiles. Relation between the microstructural characteristics of the piece and the phenomenon of suction.Vicente Beltrán Porcar. December 1988.

(3) Mechanism of formation and oxidation kinetics of black heart during the firing of ceramic pieces.Francisco Negre Medall. March 1989.

(4) Effect of the operation conditions, in the different stages of the process, on the properties and characteristics of very low porosity pavements.Vicente Bagán Vargas. July 1991.

(5) Sinterisation of pavement pieces converted into stoneware.Maria José Orts Tarí. September 1991.

**Publications in specialised scientific journals of works carried out in the ITC**

(6) Variables in the compaction of ceramic supports for pavement and facingsAmorós, J.L.; Blasco, A.; Enrique, J.E.; Beltrán, V.; Escardino, A.

(7)
Study of the compaction of ceramic supports (biscuits) for pavement and facings. II. Influence of pressing pressure and moisture. Amorós, J.L.; Beltrán, V.; Negre, F.; Escardino, A. Bol. Soc. Esp. Ceram. Vidr. 22(1), 8-18, 1983.

(8) Study of stoneware pastes for pavementsEscardino, A.; Amorós, J.L.; Enrique, J.E. Bol. Soc. Esp. Ceram. Vidr. 20(1), 17-24, 1981.

(9) Enamel-support agreement (I) Causes and factors on which it dependsAmorós, J.L.; Negre, F.; Belda, A.; Sánchez, E. Técnica Cerámica, 178, 582-292, 1989.

(10) The diagram for stoneware formation in the production of stoneware pavementsEscardino, A.; Amorós, J.L.; Enrique, J.E. Ceram. Information, 84, 211-220, 1981.

(11) single-fired stoneware pastes. Influence of the process variables on the quality of the finish productAmorós, J.L.; Blasco, A.; Beltrán, V.; Negre, F.; Arrébola, C. Técnica Cerámica, 120, 1368-1384, 1984.

(12) The pressing operation in the production of pavements by single-firing. I. Influence of the press powder on the properties of the pieces when rawAmorós, J.L.; Bagán, V.; Orts, M.J.; Escardino, A. Bol. Soc. Esp. Ceram. Vidr. 27(5), 272-282, 1988.

(13) The pressing operation in the production of pavements by single-firing. II. Influence of the nature of the press powder on the properties of the fired piecesAmorós, J.L.; Moreno, A.; Orts, M.J.; Escardino, A. Bol. Soc. Esp. Ceram. Vidr. 29(3), 1990.

(14) Liquid Suction by Porous CeramicBeltrán, V., Escardino, A;, Feliú, C.; Rodrigo, Ma. D. Br. Ceram. Trans. J. 87, 64-69, 1988.

**Papers presented to conferences on works carried out in the ITC**

(15) Relation between the pressing variables and the drying speed of the moulded pieceAmorós, J.L., Escardino, A.; Gallego, A.; Vaello, A. XXVII Annual meeting of the Spanish Society of Ceramics and Glass Mérida (Spain) 24-27 May 1987.

(16) Oxidation kinetics of organic matter in pressed ceramic productsBeltrán, V., Escardino, A.; Amorós, J.L.Minutes of the I Latin American Congress of Ceramics, Glass and Refractories (S.E.C.V.), Vol. I, 317-326 (1983).

**Other publications**

(17) Experimental techniques for controlling the compaction of pavements and ceramic facingsAmorós, J.L.; Beltrán, V.; Blasco, A.; Feliú, C.; Sancho-Tello, M.Técnica Cerámica, 116, 1234-1246, 1983.

(18) Control of compaction during the production process of pavements and ceramic facingsAmorós, J.L.; Escardino, A.; Beltrán, V.; Enrique, J.E.Técnica Cerámica, 118, 1307-1314, 1983.

(19) Procedure for measuring the bulk density of ceramic materials without using mercuryAgramunt, J.V.; Almela, V.; Cantavella, V.; Enrique, J.E:, Feliú, C.Tile Brick Int., 11(4), 245-250.

(20) Alternatives to immersion in mercury for determining tile bulk densityEnrique, J.E:, Garcia, J.; Amorós, J.L.; Beltrán, V.Interceram., 47(1), 12-17, 1998.

(21) Experimental study of the determination of dry compaction of ware shaped by unidirectional pressing, in continuous operation and in true timeBlasco, A.; Llorens, D.; Mallol, G.; Monfort, E.Tile & Brick International., 8(6), 424-438, 1992.

(22) Studio della dinamica del ciclo di pressatura e della sua influenza sulla compattazione di piastrelle di ceramica attraverso la sensorizzazione di una pressa industrialeF. Negre; G. Mallol; M. Monzó; E. Monfort; J. Sánchez; J. PortolésCeramica informazione, 348, 145-154. 1995

## DESCRIPTION OF THE INVENTION

In order to achieve the objectives and avoid the drawbacks mentioned above, the invention that is described has been carried out, consisting of a method and device for automatically controlling the apparent density of ceramic components, which permits the apparent dry density of industrially formed ceramic tiles to be kept constant, the three variables of moisture content, maximum compaction pressure and apparent dry density of those supports being related by means of compaction diagrams.

According to the invention, the novelty of the method consists of making a contactless continuous measurement of the moisture content of compacted components (already pressed), or of the press powder used in their production, and on the basis of this to automatically modify or not the pressing pressure so that the apparent dry density of recently pressed ceramic supports is kept constant; using algorithms which describe the interdependence among the said three variables.

The device consists of a contactless continuous measurement sensor of the moisture content at which the ceramic piece was formed in an industrial press; the measurement from the sensor is used as a variable in a computer in which have been programmed the interdependence functions among the moisture content measured by the sensor and the pressure which the press has to apply so that the apparent dry density of the tile remains constant; the computer being connected to the press for controlling its pressure; and the computer having a graphic terminal which permits the representation of the evolution of the operation variables, the alarms dialogue, introduction of passwords and the setting up of communications with the corresponding control automata of the press and with the industrial network for data of the corresponding production plant.

The method and device that are described present the advantages which permit the value of the apparent dry density of the pieces to be kept constant in a way that is continuous (the entire production is analysed), nondestructive and safe (mercury is not used). Currently, the method of controlling the press is manual, discontinuous and destructive, with mercury having to be used for measuring the apparent density.

Below, in order to facilitate a better understanding of this descriptive specification and forming an integral part of thereof, a figure is attached in which, on an illustrative rather than limiting basis, the object of the invention has been represented.

## BRIEF DESCRIPTION OF THE FIGURE

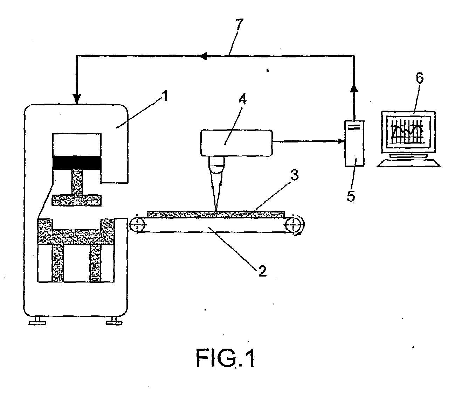

Figure 1 represents a device for automatically controlling the apparent density of ceramic components produce according to the present invention and which uses the method thereof.

## DESCRIPTION OF AN EXAMPLE OF EMBODIMENT OF THE INVENTION

A description of the invention is made forthwith, making reference to the numbering adopted in the figure.
So, on the basis of a contactless continuous measurement of the moisture content of the compacted components, the system of this example permits the pressing pressure to be modified in order to keep the apparent dry density of the recently pressed ceramic supports constant.
Figure 1 represents the device and method of this example, the essential components of the device being a press for forming ceramic tiles (1), a conveyance system (2), a ceramic tile (3) which is located on the system (2) and has just come out of the press (1), a moisture sensor (4), a computer (5), a graphic terminal for an operator to visualise the operation variables (6), and a connection (7) for communication between the press (1) and the computer (5).
The press (1) is a hydraulic press of the kind commonly used in the ceramic industry. The maximum pressure applied on the powder or mud by this press is the parameter that is continually and automatically adjusted in the invention, with the aim of keeping the compaction constant in order to counteract the fluctuations in moisture content of the press powder.
The conveyance system (2) consists of a system of motor-driven conveyor belts and its function consists of carrying the formed tiles from the press (1) to a drying machine, this conveyance system (2) also being conventional.
The tile (3) is the recently pressed ceramic tile on which the moisture content is being continuously measured. The measurement of the humidity can be made on the press powder (at different points prior to forming) or on the recently pressed piece (after forming), the second case being that of the present example.
The measurement on the press powder can be carried out when the powder is introduced into the feed chute for the press or in the feed chute itself. In both cases, prior to forming, there exist major drawbacks with regard to measuring the moisture content on the compacted piece:

- If the measurement is made at the point where the powder is fed into the chute, a time lag occurs between measurement of the moisture content and the moment at which the powder is compacted. This time lag depends on the size of the chute and on the stoppages produced in the press, and can last from a few minutes to several hours. During periods when the press is stopped, the moisture content of the powder decreases and, as a result, the measured value does not correspond to the moisture which the powder has at the moment it is formed.

- If the moisture content is measured when the powder is in the feed chute, the time lag between making the measurement and pressing of the powder is reduced compared to the previous situation, but a mechanical system is required for sampling the powder from the chute and another mechanical system is required in order to return it to the chute for the press. This set of mechanical parts complicates the measurement system since it incorporates additional devices which are necessary and not normally available (which have to be tailor-made) and, moreover, it requires continual maintenance.

In the method of the present example, described and industrially proven, the measurement of the moisture content is made directly on the recently compacted piece. This simplifies the actual measurement of the moisture content and, more importantly, it eliminates the time differences between measurement of the moisture content of the powder and application of the pressure on it, which increases the reliability of the system and makes it into a real time system.

The sensor (4) of figure 1 is a moisture sensor, normally of the electro-optical type, based on the absorption of infrared by the water contained in the ceramic mould of the compacted powder at defined wavelengths. In order to implement the control system of this example, moisture sensors can be used based on different physical principles such as ultrasound absorption, absorption-reflection of microwaves by radiofrequency, modification of the capacitance between two plates of an electrical capacitor, the absorption of a beam of neutrons or other measurement methods without making direct contact with the moisture. The basis of the invention, and of the present example, is not the principle of measuring the moisture content but instead the use of that moisture content measurement as a variable which, once it has been processed in a calculating unit containing the corresponding compaction diagram, will permit the maximum pressing pressure to be modified automatically, so that the apparent density of the piece can be kept constant.

The computer (5) is one in which have been programmed the interdependence functions among the moisture content measured by the sensor (4) and the maximum pressure which the press (1) has to apply so that the apparent dry density of the tile remains constant independently of the fluctuations in moisture of the press powder which forms the material of the tile being produced.

Shown in figure 1 with reference (6) is a graphic terminal for an operator in which is represented the evolution of the different operation variables, the alarms dialogue and the introduction of passwords which it is wished to keep constant. By means of this graphic terminal (6) communications are set up with the control automata of the press (1) and with the industrial network for data of the production plant.

Represented with reference (7) in figure 1 is the communication between the computer (5) and the press (1). Via these communication lines (7), the flow of information takes place that is needed for materialising the automatic control of the press (1).

The method and device described in this example permits the apparent density of the dry piece or apparent dry density to be kept constant, the value of which, being directly related to its porosity, determines its behaviour during the production process and defines the final size of the pieces.

Any system based on controlling the apparent density of the damp piece (apparent density when green) does not allow the final objective to be achieved. Even if the apparent density of the pieces when green is kept constant, if the moisture content of the press powder is altered (a situation that is very normal in the industrial reality), fluctuations will take place in the apparent dry density. This situation will lead to differences in the behaviour of the pieces during their manufacture. The contraction when the pieces are fired will be different and so, therefore, will be their final size, giving rise to defects in the finished product (commonly known as "calibres"), even if the apparent density when green is kept constant.

The method of this patent that has been described has demonstrated its robustness under continuous working conditions, permitting fluctuations in the final size of the pieces to be narrowed, and sometimes even eliminated completely, giving as a result the obtaining of pieces with a single size (calibre) and a considerable optimisation of the production process.

## Claims

1.    **METHOD FOR AUTOMATICALLY CONTROLLING THE APPARENT DENSITY OF CERAMIC COMPONENTS,** which permits the apparent dry density of industrially formed ceramic tiles to be kept constant, the three variables of moisture content, compaction pressure and apparent dry density of those supports being related by means of compaction diagrams; <u>**characterised in that**</u> it consists of making a contactless continuous measurement of the moisture content of the compacted components (already pressed), or of the press powder used in their production, and on the basis of this to automatically modify or otherwise the pressing pressure so that the apparent dry density of recently pressed ceramic supports is kept constant; using algorithms which describe the interdependence among the said three variables.

2.    **DEVICE FOR AUTOMATICALLY CONTROLLING THE APPARENT DENSITY OF CERAMIC COMPONENTS,** according to claim 1, **characterised in that** it consists of a contactless continuous measurement sensor (4) of the moisture content at which a ceramic component (3) was formed in an industrial press (1); the measurement from the sensor (4) is used as a variable in a computer (5) in which have been programmed the interdependence functions among the moisture content measured by the sensor (4) and the pressure which the press (1) has to apply so that the apparent dry density of the tile (3) remains constant; the computer (5) being connected (7) to the press (1) for controlling its pressure; and the computer (5) having a graphic terminal (6) which permits the representation of the evolution of the operation variables, the alarms dialogue, introduction of passwords and the setting up of communications with the corresponding control automata of the press and with the industrial network for data of the production plant.

FIG.1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2005099
- ES 20099633
- ES 2009165
- EP 0936457 A
- CN 2450661 U

**Non-patent literature cited in the description**

- **JOSÉ LUIS AMORÓS ALBARO.** *Ceramic pastes for single-fired pavements. Influence of the pressing variables on the properties of the pieces raw and on their behaviour during pressing and firing.,* November 1987
- **VICENTE BELTRÁN PORCAR.** *Suction of liquids in porous ceramic tiles. Relation between the microstructural characteristics of the piece and the phenomenon of suction.,* December 1988
- **FRANCISCO NEGRE MEDALL.** *Mechanism of formation and oxidation kinetics of black heart during the firing of ceramic pieces.,* March 1989
- **VICENTE BAGÁN VARGAS.** *Effect of the operation conditions, in the different stages of the process, on the properties and characteristics of very low porosity pavements.,* July 1991
- **MARIA JOSÉ ORTS TARÍ.** *Sinterisation of pavement pieces converted into stoneware.,* September 1991
- **AMORÓS, J.L. ; BLASCO, A. ; ENRIQUE, J.E. ; BELTRÁN, V. ; ESCARDINO, A.** *Variables in the compaction of ceramic supports for pavement and facings*
- **AMORÓS, J.L. ; BELTRÁN, V. ; NEGRE, F. ; ESCARDINO, A.** Study of the compaction of ceramic supports (biscuits) for pavement and facings. II. Influence of pressing pressure and moisture. *Bol. Soc. Esp. Ceram. Vidr.,* 1983, vol. 22 (1), 8-18
- **ESCARDINO, A. ; AMORÓS, J.L. ; ENRIQUE, J.E.** Study of stoneware pastes for pavements. *Bol. Soc. Esp. Ceram. Vidr.,* 1981, vol. 20 (1), 17-24
- **AMORÓS, J.L. ; NEGRE, F. ; BELDA, A. ; SÁNCHEZ, E.** Enamel-support agreement (I) Causes and factors on which it depends. *Técnica Cerámica,* 1989, vol. 178, 582-292
- **ESCARDINO, A. ; AMORÓS, J.L. ; ENRIQUE, J.E.** The diagram for stoneware formation in the production of stoneware pavements. *Ceram. Information,* 1981, vol. 84, 211-220
- **AMORÓS, J.L. ; BLASCO, A. ; BELTRÁN, V. ; NEGRE, F. ; ARRÉBOLA, C.** single-fired stoneware pastes. Influence of the process variables on the quality of the finish product. *Técnica Cerámica,* 1984, vol. 120, 1368-1384
- **AMORÓS, J.L. ; BAGÁN, V. ; ORTS, M.J. ; ESCARDINO, A.** The pressing operation in the production of pavements by single-firing. I. Influence of the press powder on the properties of the pieces when raw. *Bol. Soc. Esp. Ceram. Vidr.,* 1988, vol. 27 (5), 272-282
- **AMORÓS, J.L. ; MORENO, A. ; ORTS, M.J. ; ESCARDINO, A.** The pressing operation in the production of pavements by single-firing. II. Influence of the nature of the press powder on the properties of the fired pieces. *Bol. Soc. Esp. Ceram. Vidr.,* 1990, vol. 29 (3
- **BELTRÁN, V. ; ESCARDINO, A ; FELIÚ, C. ; RODRIGO, MA. D.** Liquid Suction by Porous Ceramic. *Br. Ceram. Trans. J.,* 1988, vol. 87, 64-69
- **AMORÓS, J.L. ; ESCARDINO, A. ; GALLEGO, A. ; VAELLO, A.** Relation between the pressing variables and the drying speed of the moulded piece. *XXVII Annual meeting of the Spanish Society of Ceramics and Glass Mérida (Spain),* 24 May 1987
- **BELTRÁN, V. ; ESCARDINO, A. ; AMORÓS, J.L.** Oxidation kinetics of organic matter in pressed ceramic products. *Minutes of the I Latin American Congress of Ceramics, Glass and Refractories (S.E.C.V.),* 1983, vol. I, 317-326
- **AMORÓS, J.L. ; BELTRÁN, V. ; BLASCO, A. ; FELIÚ, C. ; SANCHO-TELLO, M.** Experimental techniques for controlling the compaction of pavements and ceramic facings. *Técnica Cerámica,* 1983, vol. 116, 1234-1246
- **AMORÓS, J.L. ; ESCARDINO, A. ; BELTRÁN, V. ; ENRIQUE, J.E.** Control of compaction during the production process of pavements and ceramic facings. *Técnica Cerámica,* 1983, vol. 118, 1307-1314

- **AGRAMUNT, J.V. ; ALMELA, V. ; CANTAVELLA, V. ; ENRIQUE, J.E ; FELIÚ, C.** Procedure for measuring the bulk density of ceramic materials without using mercury. *Tile Brick Int.,* vol. 11 (4), 245-250
- **ENRIQUE, J.E ; GARCIA, J. ; AMORÓS, J.L. ; BELTRÁN, V.** Alternatives to immersion in mercury for determining tile bulk density. *Interceram.,* 1998, vol. 47 (1), 12-17
- **BLASCO, A. ; LLORENS, D. ; MALLOL, G. ; MONFORT, E.** Experimental study of the determination of dry compaction of ware shaped by unidirectional pressing, in continuous operation and in true time. *Tile & Brick International.,* 1992, vol. 8 (6), 424-438
- **F. NEGRE ; G. MALLOL ; M. MONZÓ ; E. MONFORT ; J. SÁNCHEZ ; J. PORTOLÉS.** Studio della dinamica del ciclo di pressatura e della sua influenza sulla compattazione di piastrelle di ceramica attraverso la sensorizzazione di una pressa industriale. *Ceramica informazione,* 1995, vol. 348, 145-154